# EUROPEAN PATENT APPLICATION

(11) **EP 0 916 854 A1**
(43) Date of publication of application: **19.05.1999**
(21) Application number: 98500245.0
(22) Date of filing: 12.11.1998
(51) Int. Cl.: F16B 3/00, F16D 1/08

(54) **Key device which is easily removable**

(30) Priority: 13.11.1997 ES 9702373
(71) Applicant: Mecman Industrial, S.L., 08181 Sentmenat, Barcelona (ES)
(72) Inventor: Méndez, Jordi Pareras, 08181 Sentmenat, Barcelona (ES)
(74) Representative: Duran Moya, Carlos

(57) **Abstract**

The device is characterised in that the key (3) is provided with transverse apertures which are threaded and countersunk, which, when the key is fitted in the keyway, can coincide with threaded apertures (4) which have a smaller size in the keyway (2), thus allowing the key (3) to be screwed into the keyway (2), and extracted by means of a screw (5) inserted in the threaded aperture (4) of the key (3), by acting axially on the keyway (2).

## Description

The present invention relates to a key device which is easily removable, which has substantial characteristics of novelty and inventive step in relation to the key devices which are known at present.

The key device which is the subject of the present invention corresponds to various types of keys which are constituted by an elongate element made of appropriate material, which is designed to be partially inserted in each of two slots which are opposite one another, for example a shaft and another element such as a toothed wheel, a flywheel etc., such as to form a connection which is integral, but removable, between the two aforementioned units. It can also be used to constitute a straight guide unit.

For many years, these keys have been, and still are, a basic element for connection of mechanical parts. However, in keys of the known type, there exists habitually the problem of removal from the slot, either for adjustment, or because in use, the forces to which the key is subjected result in a given permanent deformation of the key, which deformation retains the key much more firmly in the keyway, such that, for example, when the toothed wheel or flywheel has been removed, by extraction axially relative to the shaft, in many cases it is difficult to extract the key, because it has become wedged in its keyway. In order to facilitate removal, in many cases it is necessary to resort to emergency solutions, such as striking, heating the shaft, improvising extractors etc.

The object of the present invention is specifically to solve the aforementioned problem, by providing the means to allow the key to be connected and function regularly, but also to have special means which facilitate its removal, after what may be a lengthy period of use.

In order to achieve its objectives, the key device which is the subject of the present invention is characterised in that it comprises creation in the key of some transverse, through, threaded and countersunk apertures, which can optionally be combined with associated apertures of the keyway, in order to permit the use of extractor screws, which, when they are threaded into the aperture of the key, can exert pressure gradually on the base of the keyway until the key is extracted, or which device permits insertion of auxiliary screws in order to secure the key in the keyway, such that the latter has an aperture which is coaxial with that of the key, with a corresponding thread to accommodate the screw, which passes transversely through the key, is threaded into the aperture of the keyway, and provides additional securing of the key in its seating, which facilitates correct functioning and subsequent removal.

In order to assist understanding of the present invention, some explanatory drawings are attached by way of non-limiting example.
Figure 1 shows a plan view of a keyway with the key fitted;
Figures 2 and 3 each show transverse cross-sections which explain the functioning of the keyway device for extraction of the key;
Figure 4 shows a plan view similar to figure 1, which represents the case in which two apertures are provided in the key, one for securing and the other for extraction;
Figures 5 and 6 are both transverse cross-sections through the cutting planes indicated in figure 4, showing two variants of fixing by means of a screw;
Figures 7 and 8 show cross-sections through the cutting planes indicated in figure 4, corresponding to extraction of the key; and
Figures 9 and 10 are transverse cross-sections which explain the securing by means of a threaded screw, and extraction by means of a second screw according to the invention.

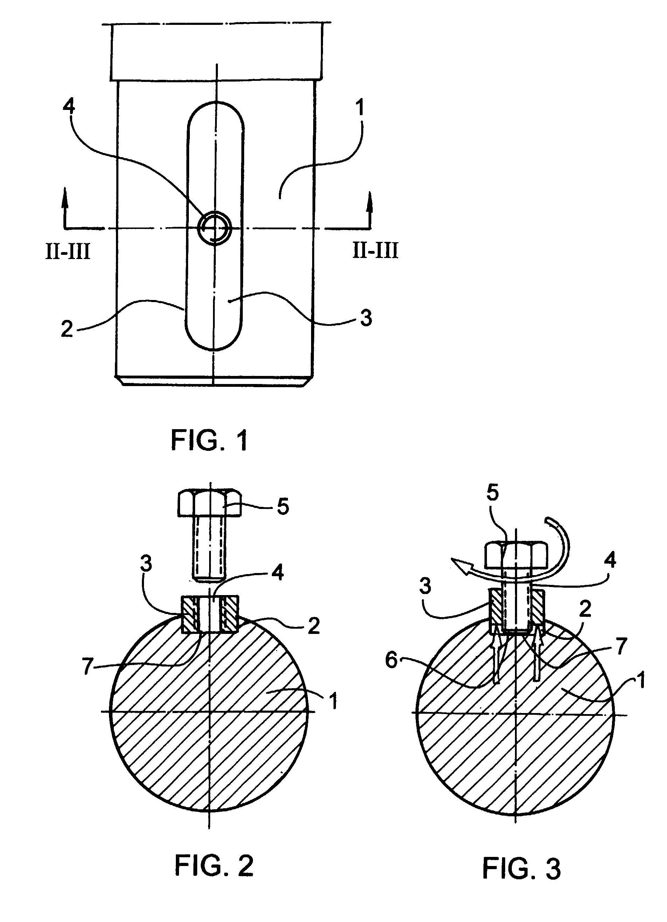

According to the figures, in a keyway device there are provided for example a shaft 1 and a female element which is to be connected to the shaft, such as a flywheel, a toothed wheel etc, there being provided in a conventional manner in the shaft 1 a keyway 2, in which there is accommodated a key 3, which is provided with a threaded aperture 4, in which there can be fitted a conventional screw 5, which, when it is threaded into the aperture 4, figure 3, by means of the end 6, exerts pressure on the base 7 of the keyway, which pressure is transformed into a force of extraction of the key, which is shown in figure 3 in an intermediate position of removal from the keyway.

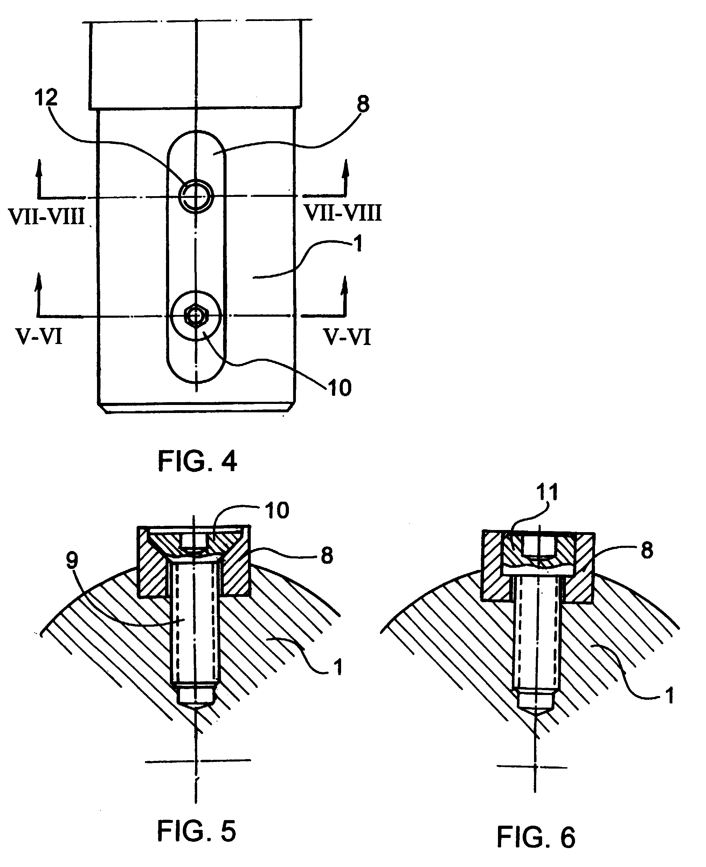

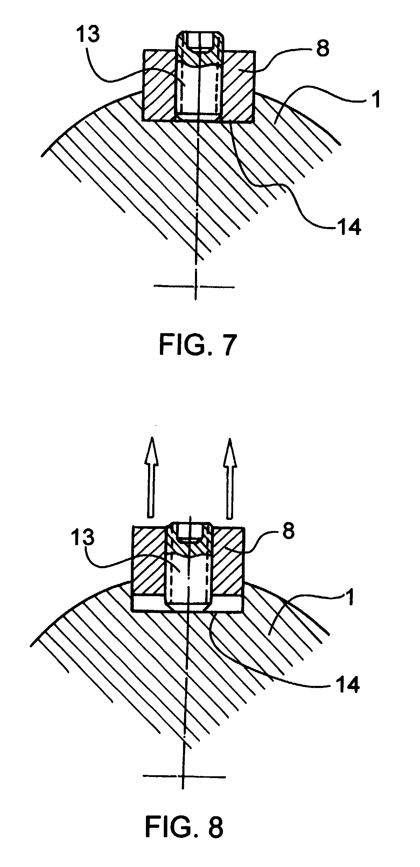

The device can also be constituted as shown in figure 4, by means of the key 8, in which there are provided two apertures, one of which is to accommodate a screw 9, figure 5, with a countersunk head 10, or an Allen head, figure 6, and another aperture 12 in the key 8 itself, which is provided with a thread, and is opened or closed simply for the sake of convenience, by means of an inactive screw 13, figures 7 and 8. When the key is removed, this screw 13 can also be connected by acting on the base of the keyway 14, figure 8, in the above-described manner, in order to give rise to extraction of the key 8. This screw must be flush with the key 8, and can be activated at the moment of removal in the manner described, this version being easier to use at the moment of removal.

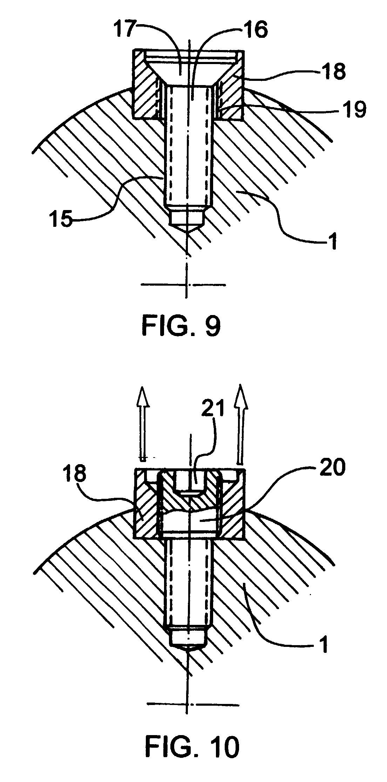

The keyway device according to the present invention is illustrated in figures 9 and 10. In the aperture 15, which has a smaller diameter than the aperture 19 of the key 18, there can be connected a screw 16, which for example is provided with a countersunk head 17, which can be connected in the seating of the key 18, and the threaded aperture 19 can be used as an aperture for an extractor, when a screw 20 is connected in the said threaded aperture 19 of the key 18, such that it is possible to actuate the said screw, for example by means of an Allen head with a recess 21, in order to obtain the extractor function.

## Claims

1. Key device which is easily removable, characterised in that the key is provided with transverse apertures which are threaded and countersunk, which, when the key is fitted in the keyway, can coincide with threaded apertures which have a smaller size in the keyway, thus allowing the key to be screwed into the keyway, and extracted by means of a screw inserted in the threaded aperture of the key, by acting axially on the keyway.
